# EUROPÄISCHE PATENTSCHRIFT

(11) **EP 1 463 170 B1**
(45) Veröffentlichungstag und Bekanntmachung des Hinweises auf die Patenterteilung: **25.04.2012**
(21) Anmeldenummer: 04006998.1
(22) Anmeldetag: 24.03.2004
(51) Int. Cl.: H02G 3/10, H02G 3/32, H02G 3/04, H02B 1/30

(54) **Zähler- und/oder Verteilerschrank**
Meter- or distribution cabinet
Armoire de distribution ou pour compteur électrique

(30) Priorität: 24.03.2003 DE 10313838; 24.09.2003 DE 10344456
(43) Veröffentlichungstag der Anmeldung: 29.09.2004
(60) Teilanmeldung: 11171824.3
(73) Patentinhaber: Hager Electro GmbH & Co. KG, 66440 Blieskastel (DE)
(72) Erfinder: Amendola, Ettore, 66131 Saarbrücken (DE); Hein, Peter, D-66386 St. Ingbert (DE); Hinschberger, Peter, D-66131 Saarbrücken (DE); Leidinger, Michael, D-66265 Heusweiler (DE); Neufing, Andreas, D-66352 Grossrosseln (DE); Noll, Jürgen, D-66440 Blieskastel (DE); Vanesson, Damien, F-57520 Grossblittersdorf (FR)
(74) Vertreter: Bernhardt, Winfrid

(56) Entgegenhaltungen:
- EP-A- 1 291 995
- EP-A2- 0 116 705
- WO-A-01/01534
- DE-A1- 10 010 581
- DE-C1- 19 811 712
- DE-U1- 29 814 785
- US-A- 6 129 316

## Beschreibung

Die Erfindung betrifft einen Zähler- und/oder Verteilerschrank gemäß Oberbegriff des Anspruchs 1. Ein solcher Schrank kommt z.B. in Einfamilienhäusern zur Stromzählung und -verteilung zum Einsatz.

Aus der US 6,129,316 ist ein im Bereich der Telekommunikation eingesetztes Schaltträgergestell bekannt, das an seiner Oberseite eine Kabelführung bildende Ösen für die Aufnahme zu dem Schaltträgergestell hinführender oder/und von dem Gestell wegführender Kabelbündel aufweist.
Aus der DE 198 11 712 C1 geht ein Schaltschrank hervor, der ein Rahmengestell umfasst, dessen offene Seiten durch Wandelemente verschließbar sind. Zumindest eines der Wandelemente weist eine dem Schrankinnenraum abgekehrte Ausbauchung zur Kabelführung auf.
In einem in der DE 100 10 581 A1 beschriebenen elektrischen Zähler- und Verteiler schrank ist ein Wanddurchbruch für die Aufnahme eines Kunststoffformteils vorgesehen, das zur Bildung von Durchbrüchen für Einführung von Kabeln in den Schrank dient.

Ein Verteilerschrank mit den Merkmalen des Oberbegriffs des Anspruchs 1 geht aus der EP 0 116 705 A2 hervor. Ein an der Oberseite des Schaltschranks gebildeter, zur Wand des Schrankes hin offener Kabelkanal umfasst ein Winkelprofil und eine ebene Rückwand. Beide Teile sind über gewinkelte Konsolen an der Wand des Schrankes anbringbar. Aufsteckbare Deckelteile schließen den Kanal an den Enden ab. Eine Kabelzuführung endet an einem Durchbruch in dem Winkelteil. Zugeführte Kabel können innerhalb des gebildeten Kabelkanals verzweigt und durch Öffnungen in der Wand des Schranks in den Schrank eingeführt werden.

Der Erfindung liegt die Aufgabe zugrunde, einen neuen Zähler- oder/und Verteilerschrank der eingangs erwähnten Art zu schaffen, der weitere Möglichkeiten zur Anbringung eines an der Außenwand des Zählerschranks verlaufenden Kabelkanals bietet.

Der diese Aufgabe lösende Zähler- oder/und Verteilerschrank nach der Erfindung ist dadurch gekennzeichnet, dass der Schrank vertikale und horizontale Schrankseitenwanteile verbindende Eckenteile umfasst, und dass die Eckenteile eine zur vertikalen Seite der Eckenteile öffnende Ausnehmung zur Aufnahme eines Steckverbindungsstücks zur Verbindung des Kabelkanals mit dem Schrank aufweisen.

Vorteilhaft lässt sich erfindungsgemäß der Kabelkanal über ein Steckverbindungsstück und ein Eckenteil des Schrankes mit dem Schrank verbinden.

Ein solcher, auch unmittelbar zur Stromentnahme nutzbarer Verteilerschrank nach der Erfindung erspart Kabelverlegungen am Installationsort. Bei Installation des Schranks, z.B. in einer Garage, bedarf es im Garagenraum keines Einbaus weiterer Steckdosen. Gegebenenfalls könnte die Kabelführung vom Schrank weg im Installationsraum unter Einsparung von Unterputzverlegungen weitergeführt werden.

Der Kabelkanal steht vorzugsweise mit einer Kabelaustrittsöffnung an der Schrankoberseite in Verbindung. Zum Beispiel kann in einen Kabelkanalteil, der entlang einer vertikalen Seitenwand verläuft, eine Steckdose eingebaut sein. Der Zähler- und Verteilerschrank mit dem nach außen bis zur Steckdose abgedeckten Kabelkanal erfüllt alle an einen solchen Schrank zu stellenden Schutzanforderungen.

In der bevorzugten Ausführungsform der Erfindung umfasst der Kabelkanal ein U-Profil und eine an der offenen Seite des U-Profils anbringbare Abdeckung. Zweckmäßig lässt sich die Abdeckung auf das U-Profil aufstecken und die Abdeckung dient als Halter für in den Kabelkanal eingebaute Steckdosen.

Der Kabelkanal kann am Schrank, von der Vorderseite aus gesehen, rahmenartig als Teilrahmen oder geschlossener Rahmen umlaufen, wobei sich der Kabelkanal z.B. entlang der oberen Seitenwand des Schranks und wenigstens einer der vertikalen Seitenwände erstreckt.

Insbesondere in den seitlichen Teilen des Kabelkanals können Steckdosen oder/und Verteilereinrichtungen eingebaut sein.

Der Kabelkanal lässt sich durch ein zum Schrank und der Installationswand offenes Winkelteil bilden, wobei sich ein solches Winkelteil insbesondere für die Bildung eines Kabelkanalabschnitts an der Schrankoberseite eignet.

Bei dem Verbindungsstück handelt es sich vorzugsweise um ein in der Ausnehmung einrastendes Steckverbindungsstück. An dem Verbindungsstück lassen sich einen Endrand der Kabelkanalwand eines seitlichen Kabelkanals hintergreifende Krallen bilden.

Das obengenannte Winkelteil lässt sich am Rand durch Halter mit einem im Abstand von der Rückwandebene des Schranks angeordneten, nach oben vorstehenden Halteschenkel befestigen, wobei an dem Halteschenkel eine zur Befestigung an der Installationswand vorgesehene Verlängerung gelenkig angebracht sein kann.

Eine variablere Anbringung von Außenanbauten am Zähler- und/oder Verteilerschrank ermöglicht eine Haltevorrichtung mit Befestigungseinrichtungen, die zur Anbringung des Außenanbaus an der Schrankseitenwand in unterschiedlichen Abständen zur Schrankrückwand vorgesehen sind.

Vorteilhaft erlaubt es eine solche Haltevorrichtung, die Position des Außenanbaus auf der Schrankseitenwand an die Dicke einer nach Installation des Schranks an einer Rohbauwand auf die Wand aufgebrachte Anschlussputzschicht anzupassen.

Die genannten Abstände können kontinuierlich oder in kleinen Stufen einstellbar sein und die Befestigungseinrichtungen Rast- oder/und Schraubverbindungseinrichtungen umfassen, wobei den unterschiedlichen Abständen von der Rückwand unterschiedliche Positionen einer Rastnase in einer Rastzahnung oder unterschiedliche Positionen einer Verbindungsschraube in einem Langloch entsprechen. Eine solche Zahnung oder ein solches Langloch kann am Schrank oder/und Außenanbau gebildet sein.

In einer bevorzugten Ausführungsform der Erfindung weisen die Befestigungseinrichtungen ein in unterschiedlichen Positionen an dem Schrank oder dem Außenanbau anbringbares, vorzugsweise separates, Verbindungsstück auf, das ebenfalls mit der genannten Zahnung oder dem Langloch vorgesehen sein kann.

Vorzugsweise ist das Verbindungsstück als Winkel ausgebildet und ein Schenkel mit dem Schrank und der andere Winkelschenkel mit dem Außenanbau verbindbar oder verbunden.

In weiterer Ausgestaltung der Erfindung weist der eine Schenkel einen vorstehenden Zapfen zum Eingriff in Öffnungen in der Schrankwand auf, wobei es sich bei den Öffnungen vorzugsweise um Langlöcher mit einer Aufweitung, in welche ein hinterschnittener Kopf der Zapfen einführbar ist, handelt.

Insbesondere kann der Kopf mit an der Rastzahnung einrastenden Nasen versehen sein, welche an einem zur Anordnung innerhalb des Schranks angeordneten Halteblock gebildet ist. Vorzugsweise umfasst die Rastzahnung eine einseitig offene Nut mit an den Nutenwänden einander gegenüberliegenden Zahnreihen.

In weiterer Ausgestaltung der Erfindung können Einrichtungen zur Blockierung der Rastnasen in der Rastzahnung vorgesehen sein, die eine ungewollte Lösung der Rastverbindung verhindern.

Der genannte Zapfen weist vorteilhaft einen Längsschlitz und ggf. eine Längsbohrung für die Aufnahme eines Blockierstifts auf. Durch den Längsstift sind flexible, aufeinander zu verbiegbare Schenkel gebildet, die eine Verschiebung des Rastkopfes innerhalb der Rastzahnung und damit die gewünschten Einstellungen erleichtern. Vorteilhaft weist der Zapfen im Querschnitt eine Rundung oder Keilspitze auf, die das Einschieben in die Nutöffnung erleichtert.

Die genannte Verbindungsschraube kann z.B. kronenartig ausgebildet sein, so dass sie sich durch einen im Winkel zur Schraubenachse, ggf. durch eine Öffnung im Verbindungsstück hindurchgeführten, Kegelkopf eines Werkzeugs drehen lässt.

Die Erfindung soll nun anhand von Ausführungsbeispielen und der beiliegenden, sich auf diese Ausführungsbeispiele beziehenden Zeichnungen näher erläutert werden. Es zeigen:

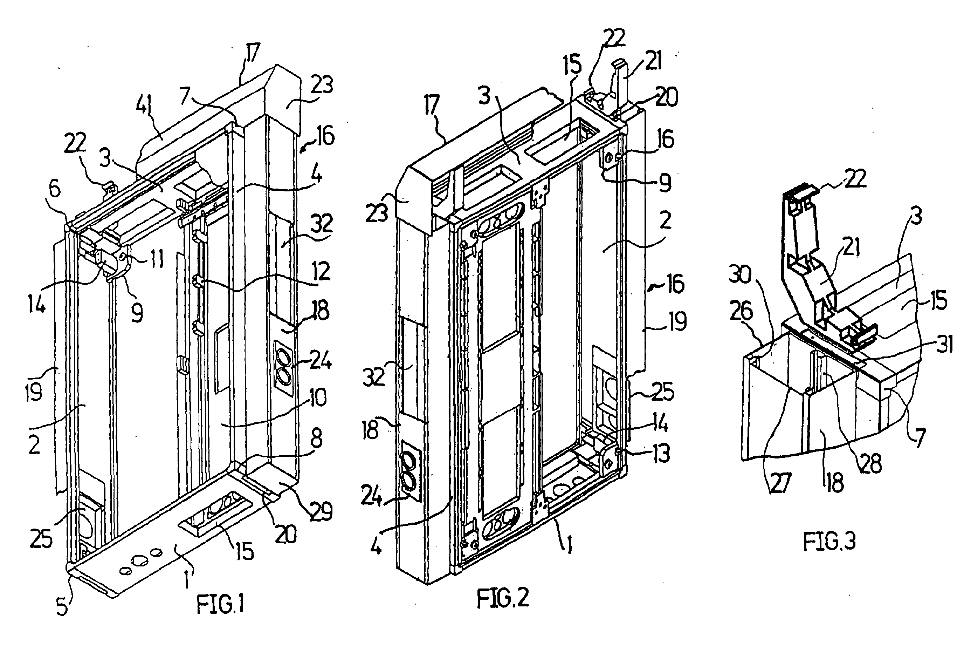

- Fig. 1: ein erstes Ausführungsbeispiel für einen Zähler- und Verteilerschrank nach der Erfindung in einer perspektivischen Vorderansicht schräg von unten,
- Fig. 2: den Zähler- und Verteilerschrank von Fig. 1 in einer perspektivischen Rückansicht schräg von oben,
- Fig. 3: ein Detail des Zähler- und Verteilerschranks von Fig. 1 und 2,
- Fig. 4: ein zweites Ausführungsbeispiel für einen Zähler- und Verteilerschrank nach der Erfindung in einer perspektivischen Vorderansicht, und
- Fig. 5: ein Detail des Zähler- und Verteilerschranks von Fig. 4,
- Fig. 6: einen Eckenausschnitt eines Zähler- und Verteilerschranks mit einer Haltevorrichtung gemäß der Erfindung,
- Fig. 7: ein in der Haltevorrichtung von Fig. 6 verwendetes Verbindungsstück in einer perspektivischen Seitenansicht,
- Fig. 8: einen Teil des Verbindungsstücks von Fig. 7 in einer perspektivischen Ansicht schräg von unten,
- Fig. 9: einen zum Einbau in den Zähler- und Verteilerschrank von Fig. 6 vorgesehenen Halteblock,
- Fig. 10: ein weiteres Ausführungsbeispiel für ein in einer Vorrichtung nach der Erfindung verwendbaren Verbindungsstücks in einer perspektivischen Teilansicht schräg von unten,
- Fig. 11: eine weitere Teilansicht des Verbindungsstücks von Fig. 10, das mittels einer Schraube an einem Zähler- und Verteilerschrank befestigt ist, und
- Fig. 12: ein drittes Ausführungsbeispiel für ein in einer Vorrichtung nach der Erfindung verwendbares Verbindungsstück.

Der in den Figuren gezeigte Zähler- und Verteilerschrank weist Seitenwandteile 1 bis 4 auf, die über Eckenteile 5 bis 8 miteinander verbunden sind. Die Eckenteile bestehen aus Kunststoff. Bei den Seitenwandteilen handelt es sich um Blechteile.

Die Eckenteile 5 bis 8 sind an ihrem der Installationswand zugewandten Ende jeweils mit einem seitlich vorstehenden, plattenartigen Fußteil 9 versehen, das auf seiner der Installationswand abgewandten Seite mit einer Rückwand des Zähler- und Verteilerschrankes verbunden ist.

In dem gezeigten Ausführungsbeispiel ist die Rückwand zweiteilig mit einem ein Zählerfeld bildenden Plattform teil (nicht gezeigt) und einem damit formschlüssig verbindbaren, ein Verteilerfeld bildenden Plattformteil 10 ausgebildet.

Die Verbindung von Rückwand und Eckenteilen erfolgt mit Hilfe von den Fußteilen 9 vorstehender Zapfen 11, welche in entsprechende Öffnungen in der Rückwand bzw. den Plattformteilen eingreifen und dort unter Bildung einer unlösbaren Verbindung einrasten.

An den als Kunststoffspritzteile hergestellten Plattformteilen sind Anformungen zur Bildung von Sitzen oder/und Teilen von Schrankeinbauten gebildet, z.B. Trägertürme 12 für die Aufnahme von Hutprofilschienen.

Die Eckenteile 5 bis 8 weisen jeweils ein Hakenelement 13 für die Aufhängung des Schrankes an einer Wand auf. Das Hakenelement 13 ist durch eine Öffnung im Fußteil 9 geführt und mit einem Verstellmechanismus 14 verbunden, dessen Gehäuse an dem betreffenden Eckenteil befestigt ist.

Die Seitenwandteile 1 bis 4 aus Blech sind an ihren Längsseiten dreifach abgekantet, wobei durch zwei Abkantungen ein U-Profil und eine dritte Abkantung ein zum Türinnern vorstehender Steg gebildet ist. Durch die Stege aller Seitenwandteile entsteht ein umlaufender Falz für eine nicht gezeigte Schranktür.

Über die U-Profile sind die Seitenwandteile 1 bis 4 auf die Schenkel der als Winkelteile ausgebildeten Eckenteile 5 bis 8 aufgesteckt.

In allen Seitenwandteile 1 bis 4 ist wenigstens eine Öffnung 15 für die Durchführung von Kabeln vorgesehen, wobei in der oberen Seitenwandteil 3 zwei solcher Öffnungen 15 gebildet sind. Die Öffnungen sind durch Abdeckungen 25 aus Kunststoff verschließbar oder durch eine zwecks Kabeldurchführung durchstoßbare Membran (nicht gezeigt) abgedeckt.

Die Eckenteile 5 bis 7 weisen jeweils an ihrer Eckenaußenseite Sitze 20 für die Anbringung von Kabelkanälen auf. In dem gezeigten Ausführungsbeispiel erstreckt sich ein solcher Kabelkanal 16 über die gesamte Länge der oberen Seitenwand um die oberen Wandecken herum bis zum unteren Ende der rechten und linken Seitenwand des Schranks.

Auf der Schrankoberseite ist ein Teil 17 dieses Kanals 16 durch ein zur Installationswand und zum Schrank offenes Winkelteil 41 gebildet. Das Winkelteil 41 ist auf zwei gewinkelte Halter 21 aufsteckbar, welche mit Rastnasen 22 in entsprechende, nicht sichtbare Gegenstücke an der Innenseite des Winkelteils einrasten.

Kabelkanalteile 18 und 19 an der rechten und linken Seitenwand des Schranks weisen einen rechteckigen Querschnitt auf und sind durch ein U-Teil 26 und eine Abdeckung 27 gebildet, wobei sich die Abdeckung 27 über Randabwinklungen in Taschen 30 am U-Teil 26 einstecken lässt. Stirnwände 23 am Kanalteil 17 und Stirnwände 29 an den freien Enden der Kabelkanalteile 18 und 19 schließen den Kabelkanal 16 nach außen ab.

Die gewinkelten Halter 21 sowie die seitlichen Kabelkanalteile 18 und 19 sind an den Eckenteilen 5 bis 8 befestigt, welche Sitze 20 mit zueinander rechtwinkligen Sitzflächen und Bohrungen 31 für eine Verbindung mit den Kanalteilen, z.B. über Steckerstifte, aufweisen.

In den seitlichen Kabelkanalteilen 17 und 18 verläuft entlang der Bodenwand in Längsrichtung des Kanals eine Befestigungsschiene 28, an welcher Einbauten wie z.B. Stromverteilereinrichtungen befestigt werden können. In die seitlichen Kanalteile 18 und 19 sind z.B. bei 24 Mehrfachsteckdosen eingebaut, welche an der betreffenden Abdeckung 27 der Kanalteile 18,19 befestigt sind.

Aus den Öffnungen 15 in der Wandoberseite aus dem Schrank herausgeführte Kabel können in entgegengesetzten Richtungen entweder in den Kabelkanalteil 18 oder 19 hinein verlegt werden.

Es ist möglich, innerhalb der Kanalteile 18 und 19 an der Verteilerschiene Einbauten wie Verteilereinrichtungen, Sicherungseinrichtungen u. dgl. zu befestigen. Zugang zu Einbauten bietet eine Öffnung 32, welche durch einen abgetrennten Teil der Abdeckung 27 verschließbar ist.

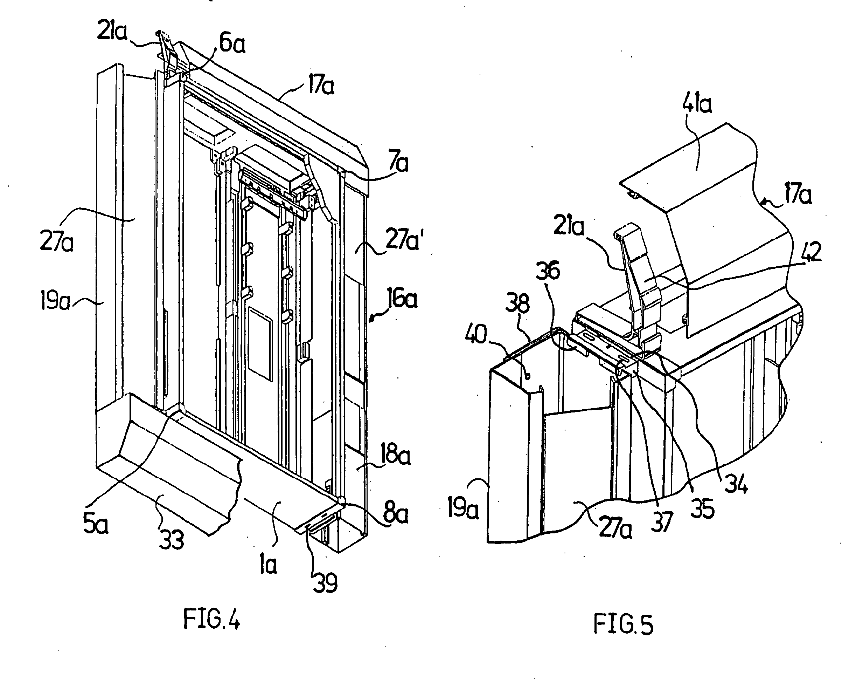

Es wird nun auf die Fig. 4 und 5 Bezug genommen, wo gleiche oder gleichwirkende Teile mit derselben Bezugszahl wie in den vorangehenden Figuren bezeichnet sind, wobei den betreffenden Bezugszahlen jeweils der Buchstabe a beigefügt ist.

Bei dem Ausführungsbeispiel von Fig. 4 und 5 ist neben Kanalteilen 17a, 18a und 19a ein weiterer, sich über die gesamte Länge eines unteren Seitenwandteils 1a erstreckender Kanalteil 33 vorgesehen. Zur Erläuterung der Konstruktion sind die genannten Kanalteile mit Ausschnitten in Eckbereichen des Schranks dargestellt.

Der Kanalteil 19a weist eine Abdeckung 27a auf, welche zur Ebene der den Zählerund Verteilerschrank aufnehmenden Trägerwand um 45° geneigt ist. Eine Abdeckung 27a' des Kanalteils 18a erstreckt sich parallel zur Trägerwand.

An Eckenteilen 5a bis 6a ist jeweils ein hakenförmiger Halter 21a angebracht, welcher gegenüber dem Halter 21 des vorangehenden Ausführungsbeispiels um 180° gedreht ist.

An den Eckenteilen 5a bis 8a ist jeweils eine zur vertikalen Seite des Eckenteils öffnende Ausnehmung 34 gebildet, welcher der Aufnahme eines in dem betreffenden Ausführungsbeispiel quaderförmigen Verbindungsstücks 35 dient, an welchem zwei Krallen 36 und zwei Rastnasen 37 gebildet sind. Das hohl mit inneren Verstärkungsrippen oder als Block gebildete Verbindungsstück 35 lässt sich mit Hilfe der Krallen 36 am Endrand einer Wand des Kanalteils 19a anklemmen.

Das Bezugszeichen 38 weist auf ein gewinkeltes Verstärkungsblech hin.

In den Eckenteilen sind entsprechend den Rastnasen Rastöffnungen 39 vorgesehen, die in einem die Ausnehmung 34 begrenzenden, verhältnismäßig dünnen und daher nachgiebigen Abschnitt des betreffenden Eckenteils gebildet sind.

Das Bezugszeichen 40 weist auf Bohrungen hin, über welche der Kanalteil 27a zusätzlich an der Trägerwand für den Schrank befestigt werden kann. Entsprechende Bohrungen weist auch der Kanalteil 18a auf.

Zur Montage des Kabelkanals am Schrank werden die Verbindungsstücke 35 auf die Enden der Kanalteile 18a,19a aufgesteckt und die Verbindungsstücke 35 in die Ausnehmungen 34 eingesteckt, wobei die Rastnasen 37 an dem Verbindungsstück 35 in die betreffenden Rastöffnungen 39 am Eckenteil einrasten.

Die Anbringung des gewinkelten Halters 21a in der gezeigten Lage hat den Vorteil, während der Montage des Schrankes an einer Wand oberhalb des Schranks aus der Wand herausgeführte Kabel vorübergehend seitlich über den oberen Schrankecken abhängen zu können, wo sie die Montagearbeiten nicht stören. Nach oben vorstehende Halteschenkel 42 der gewinkelten Halter 21a verhindern dann ein Abrutschen der Kabel über die Schrankecken nach vorn. Darüber hinaus beeinträchtigt der Halter in dieser Anordnung nicht den zur Verlegung von Kabeln verfügbaren Querschnitt.

Die Halter 21a in der gezeigten Anordnung können vorteilhaft auch unabhängig von der hier beschriebenen Erfindungslösung eingesetzt werden, nämlich in konventionellen Schränken, bei denen den Winkelteilen 41 entsprechende Teile lediglich zur Abdeckung von der Schrankoberseite aus dem Schrank in die Wand geführter Kabel dienen.

Vorteilhaft bilden die Ausnehmungen 34 beim Transport des Schrankes nutzbare Griffe.

Zur Stabilisierung ließe sich der gewinkelte Halter 21a mit einer bis zur Trägerwand geführten Verlängerung versehen, die gelenkig mit dem freien Ende des Halteschenkels verbunden ist und an der Trägerwand befestigt werden kann.

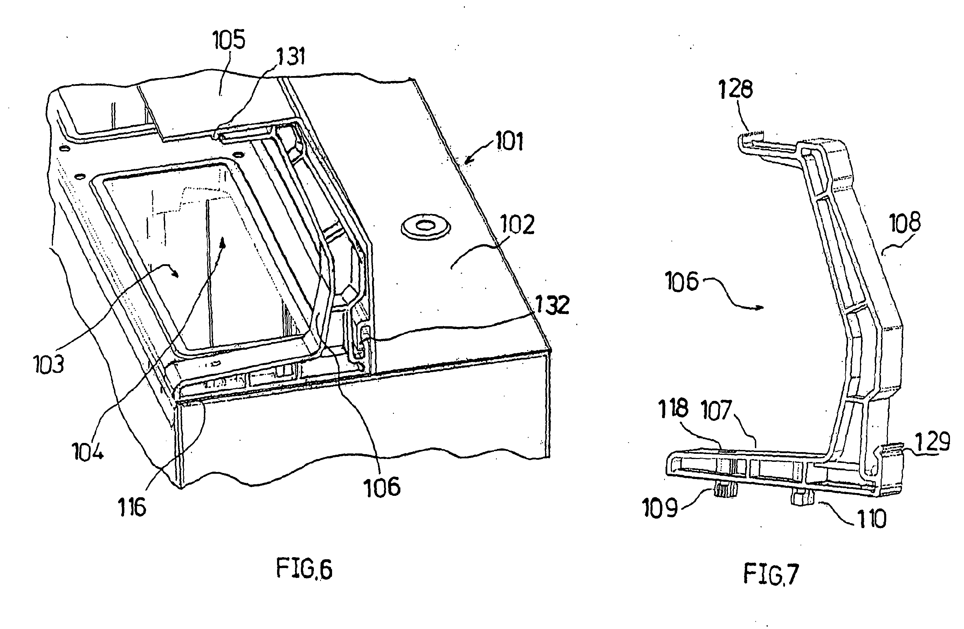

Eine horizontale Seitenwand 102 an der Oberseite eines in Fig. 6 gezeigten Zähler- und/oder Verteilerschranks 101 weist Öffnungen 103 für die Durchführung von Kabeln auf.

Die Öffnungen 103 münden in einen Kabelkanal 104, der durch ein sich über die gesamte Breite des Schranks erstreckendes Kunststoffwinkelprofil 105 gebildet ist. Eine den Kabelkanal 104 an dem gezeigten Ende verschließende Endkappe ist in Fig. 6 nicht gezeigt.

Der Verbindung des Kunststoffwinkelprofils 105 mit dem Schrank 101 dient ein Verbindungsstück 106. Das fachwerkartig ausgebildete, aus Kunststoff im Spritzgussverfahren hergestellte Verbindungsstück 106 ist winkelig mit einem geraden Schenkel 107 und einem gebogenen Schenkel 108 ausgebildet und weist am freien Ende des Schenkels 108 eine Rastnase 128 und am Verbindungsende der Schenkel 107,108 eine Rastnase 129 auf.

Von der Unterseite des Schenkels 107 stehen Zapfen 109 und 110 vor, von denen der Zapfen 110 einstückig mit einem unteren Teil 111 des Schenkels 107 verbunden ist. Dagegen ragt der Zapfen 109 durch eine quadratische Öffnung 113 in dem unteren Teil 111 hindurch und geht einstückig in einen oberen, mit dem unteren Teil 111 über Stege verbundenen Teil 112 des Schenkels 107 über.

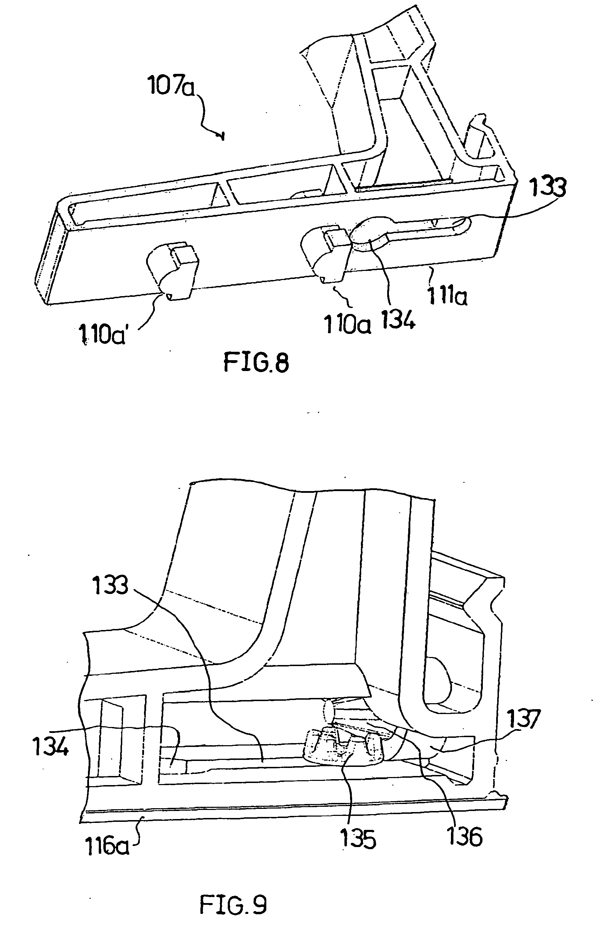

Wie Fig. 8 ferner erkennen lässt, weisen beide Zapfen 109,110 an einer Seite eine Rundung 114 auf. Durch Vorsprünge an zwei weiteren, einander gegenüberliegenden Seiten sind an jedem der Zapfen 109,110 Hinterschneidungen 115 gebildet, deren Höhe der Dicke einer zur Bildung der oberen Seitenwand 102 verwendeten Blechhaut 116 zuzüglich der Höhe einer durch Tiefziehen gebildeten Randabwinklung von (in den Figuren nicht sichtbaren) Langlöchern in der Blechhaut 116 entspricht.

Im Unterschied zu dem Zapfen 110 weist der Zapfen 109 zusätzlich einen Längsschlitz 117 auf, durch den zwei, elastisch verbiegbare Zapfenschenkel gebildet sind. Der durch den Längsschlitz 117 hälftig geteilte Zapfen 109 ist ferner mit einer zur Außenseite des Schenkelteils 112 öffnenden Durchgangsbohrung 119 versehen, welche der Aufnahme eines (nicht gezeigten) Blockierstifts dient. Am hinterschnittenen Ende des Zapfens 109 sind auf beiden Seiten Zähne 120 gebildet, wobei ein der geteilten Rundung 114 zugewandter erster Zahn eine zur Rundung hin verlängerte Flankenfläche 121 aufweist.

Die Zähne 120 sind zum Eingriff in eine Zahnung 122 vorgesehen, welche an einem in Fig. 9 gezeigten Halteblock 123 gebildet ist. Der Halteblock 123 wird über vorstehende Nasen 124 und 125 an einer (nicht gezeigten) Kunststoffinnenverkleidung des Schranks 101 befestigt.

Wie Fig. 9 zu entnehmen ist, weist die Zahnung 122 Zahnreihen an einander gegenüberliegenden Wänden einer einseitig zu einer Ausnehmung 127 offenen Nut 130 auf, wobei an der Öffnung der Nut zwei Schrägen 126 in zueinander keilartiger Anordnung gebildet sind.

Zur Montage des Kabelkanals 104 sind zunächst Verbindungsstücke 106 an den Enden der oberen horizontalen Seitenwand 102 des Schranks 101 zu befestigen. Hierzu werden die Zapfen 109 und 110 jeweils in eine Aufweitung der obengenannten Langlöcher in der Blechhaut 116 der Seitenwand 102 eingeführt. Bei Vorschub der Verbindungsstücke 106 in Richtung zur Schrankrückwand hintergreifen die hinterschnittenen Enden der Zapfen 109,110 die Ränder der genannten Langlöcher. Der Zapfen 109 dringt, geführt durch die verlängerten Flankenflächen 121 und die Schrägen 126, in die einseitig offene Nut 130 ein, wo die Zähne 120 und in Zähnen der Rastung 122 einrasten. Während des Vorschubs, bei dem die Schenkel des Zapfens 109 aufeinander zu gebogen werden, bildet die Ausnehmung 127 eine Führung für den Zapfen 110.

Auf die nun durch Einrastung befestigten Verbindungsstücke 106 lässt sich das Kunststoffwinkelprofil 105 aufsetzen, wobei die Rastnasen 128 und 129 an entsprechenden Vorsprüngen 131 und 132 am Profil 105 einrasten. Das Profil 105 mit den daran befestigten Verbindungsstücken 106 lässt sich nun vorschieben, bis der der Montagewand zugewandte Rand des Profils 105 die Wandputzschicht erreicht. In einer entsprechenden Raststellung kann in die Durchgangsbohrung 119 ein Blockierstift eingeführt werden, der ein Zusammendrücken der Schenkel des Zapfens 109 und damit eine Lösung der Rastung verhindert.

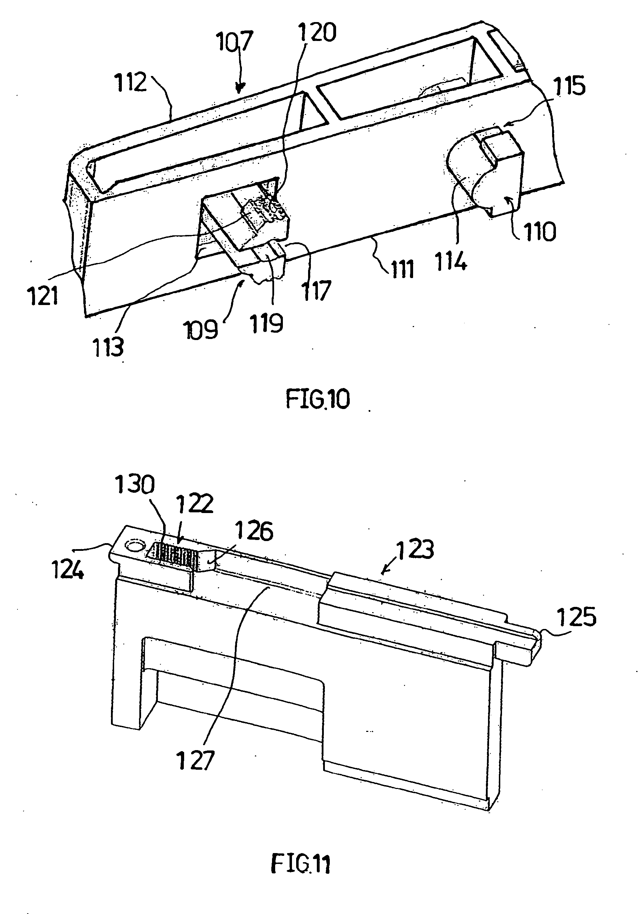

Bei dem Ausführungsbeispiel für ein Verbindungsstück gemäß den Fig. 10 und 11 sind zwei dem Zapfen 110 des vorangehenden Ausführungsbeispiels entsprechende Zapfen 110a und 110a' ohne Zähne vorgesehen. Ein weiterer Unterschied zu den vorangehenden Ausführungsbeispielen besteht in einem Langloch 133 mit einer Aufweitung 134, das in einem unteren Teil 111a eines Schenkels 107a gebildet ist.

Gemäß Fig. 11 ist durch das Langloch 133 hindurch eine Befestigungsschraube 135 geführt, deren Kopf kronenartig ausgebildet ist, so dass er sich durch das kegelförmige, gezahnte Ende eines im rechten Winkel zur Drehachse der Schraube 135 angeordneten Drehwerkzeugs 136 drehen lässt. Das Drehwerkzeug 136 ist durch eine Öffnung 137 in dem Verbindungsstück geführt, die unter Bildung einer Führung für das Werkzeug hülsenartig verlängert ist.

Die Schraube 135 greift in ein ggf. durch die Schraube selbst geschnittenes Gewinde in einer Blechhaut 116a des Schranks oder in einem hinter der Blechhaut angeordneten Gegenhalter ein.

Zur Montage des Verbindungsstücks am Schrank wird der Kopf der Schraube 135 zunächst durch die Aufweitung 134 geführt, dann seitlich in eine gewünschte Position im Langloch verschoben und durch das Werkzeug 136 arretiert. Bei der Drehung der Schraube 135 wird das Werkzeug 136 in der hülsenartig verlängerten Öffnung 137 geführt und im Eingriff mit der kronenartigen Zahnung des Schraubenkopfs gehalten.

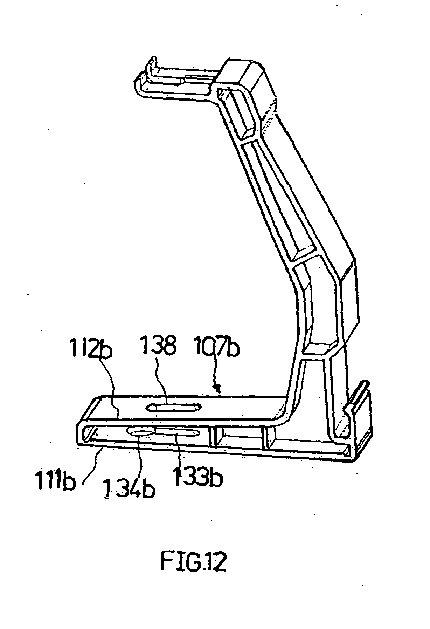

Bei dem Ausführungsbeispiel von Fig. 12 weist ein oberer Teil 112b eines Schenkels 107b eines Verbindungsstücks ein Langloch 138 auf, das zu einem Langloch 133b mit einer Aufweitung 134b im unteren Teil 111b des Schenkels 107b ausgerichtet ist. Durch das Langloch 138 hindurch lässt sich eine (nicht gezeigte) Befestigungsschraube in einer gewünschten Stellung innerhalb des Langlochs festziehen.

## Patentansprüche

1. Zähler- und/oder Verteilerschrank der Stromversorgungsinstallation von Gebäuden, mit einem am Schrank anbringbaren Außenanbau zur Bildung eines entlang der Schrankwand verlaufenden Kabelkanals (16), der nach außen geschlossen und mit einer Kabelaustrittsöffnung (15) in der Schrankwand (3) verbunden ist,
**dadurch gekennzeichnet,**
**dass** der Schrank vertikale und horizontale Schrankseitenwandteile (1-4) verbindende Eckenteile (5-8) umfasst, und
**dass** die Eckenteile (5-8) eine zur vertikalen Seite der Eckenteile (5-8) öffnende Ausnehmung (34) zur Aufnahme eines Steckverbindungsstücks (35) für die Verbindung des Kabelkanals (16) mit dem Schrank aufweisen.

2. Zähler- und/oder Verteilerschrank nach Anspruch 1,
**dadurch gekennzeichnet,**
**dass** der Kabelkanal (16) mit einer Kabelaustrittsöftnung (15) in der Schrankwand (3) an der Schrankoberseite verbunden ist.

3. Zähler und/oder Verteilerschrank nach Anspruch 1 oder 2,
**dadurch gekennzeichnet,**
**dass** der Kabelkanal (16) ein U-Profil (26) und eine an dem U-Profil (26) anbringbare Abdeckung (27) umfasst.

4. Zähler- und/oder Verteilerschrank nach einem der Ansprüche 1 bis 3,
**dadurch gekennzeichnet,**
**dass** der Kabelkanal (16) ein zum Schrank und der Installationswand offenes Winkelteil (41) umfasst.

5. Zähler und/oder Verteilerschrank nach einem der Ansprüche 1 bis 4,
**dadurch gekennzeichnet,**
**dass** der Kabelkanal am Schrank rahmenartig als Teilrahmen (16) oder geschlossener Rahmen umläuft.

6. Zähler- und/oder Verteilerschrank nach Anspruch 5,
**dadurch gekennzeichnet,**
**dass** sich der Kabelkanal (16) entlang des Oberseitenwandteils (3) und wenigstens einer der vertikalen Seitenwandteile (2,4) des Schrankes erstreckt

7. Zähler- und/oder Verteilerschrank nach Anspruch 6,
**dadurch gekennzeichnet,**
**dass** der Kabelkanal (16) an der Schrankoberseite durch das Winkelteil (41) gebildet ist.

8. Zähler- und/oder Verteilerschrank nach einem der Ansprüche 1 bis 7,
**dadurch gekennzeichnet,**
**dass** in den Kabelkanal (16) Verteilereinrichtungen und/oder, insbesondere mit der Abdeckung (27) verbundene, Steckdosen (24) eingebaut sind.

9. Zähler und/oder Verteilerschrank nach einem der Ansprüche 1 bis 8,
**dadurch gekennzeichnet,**
**dass** das Verbindungsstück (35) in der Ausnehmung (34) einrastet.

10. Zähler- und/oder Verteilerschrank nach einem der Ansprüche 1 bis 9,
**dadurch gekennzeichnet,**
**dass** das Verbindungsstück (35) einen Endrand der Kanalwand eines seitlichen Kabelkanals (18a,19a) hintergreifende Krallen (36) aufweist.

11. Zähler- und/oder Verteilerschrank nach einem der Ansprüche 4 bis 10,
**dadurch gekennzeichnet,**
**dass** das Winkelteil (41a) am Schrank durch ein Verbindungsstück (21a) mit einem im Abstand von der Rückwandebene des Schranks angeordneten, nach oben vorstehenden Halteschenkel (42) befestigt ist.

12. Zähler- und/oder Verteilerschrank nach Anspruch 11,
**dadurch gekennzeichnet,**
**dass** an dem Halteschenkel eine zur Befestigung an der Installationswand vorgesehene Verlängerung gelenkig angebracht ist.

13. Zähler- oder/und Verteilerschrank nach einem der Ansprüche 1 bis 12,
**gekennzeichnet durch** eine Haltevorrichtung für den Außenanbau (105) mit Einrichtungen zur Befestigung des Außenanbaus (105) an einer Schrankseitenwand (102), wobei die Befestigungseinrichtung zur Anbringung des Außenanbaus (105) an der Schrankseitenwand (102) in unterschiedlichen Abständen zur Schrankrückwand vorgesehen sind.

14. Zähler- oder/und Verteilerschrank nach Anspruch 13,
**dadurch gekennzeichnet,**
**dass** die Abstände zur Schrankrückwand kontinuierlich oder in Stufen einstellbar sind.

15. Zähler- oder/und Verteilerschrank nach Anspruch 13 oder 14,
**dadurch gekennzeichnet,**
**dass** die Befestigungseinrichtungen Rast- oder/und Schraubverbindungseinrichtungen aufweisen und die unterschiedlichen Abstände unterschiedlichen Positionen einer Rastnase (120) in einer Rastzahnung (122) oder unterschiedlichen Positionen einer Verbindungsschraube (135) in einem Langloch (133) entsprechen.

16. Zähler- oder/und Verteilerschrank nach einem der Ansprüche 13 bis 15,
**dadurch gekennzeichnet,**
**dass** die Befestigungseinrichtungen ein in unterschiedlichen Positionen an dem Schrank (101) oder dem Außenanbau (105) anbringbare, vorzugsweise separates, Verbindungsstück (106) umfassen.

17. Zähler- oder/und Verteilerschrank nach Anspruch 16,
**dadurch gekennzeichnet,**
**dass** das Verbindungsstück (106) als Winkel ausgebildet, wobei ein Winkelschenkel (107) mit dem Schrank (101) und der andere Winkelschenkel (108) mit dem Außenanbau (105) verbindbar oder verbunden ist.

18. Zähler- oder/und Verteilerschrank nach Anspruch 17,
**dadurch gekennzeichnet,**
**dass** ein von dem einen Verbindungsstück (106) vorstehender Zapfen (109,110) in eine Öffnung in der Schrankseitenwand (102) eingreift.

19. Zähler- oder/und Verteilerschrank nach Anspruch 17 oder 18,
**dadurch gekennzeichnet,**
**dass** die Öffnung als Langloch ausgebildet ist und eine Aufweitung aufweist, in welche sich ein hinterschnittener Kopf des Zapfens (109,110) einführen lässt.

20. Zähler- oder/und Verteilerschrank nach Anspruch 19,
**dadurch gekennzeichnet,**
**dass** der hinterschnittene Kopf an der Rastzahnung (122) einrastende Nasen (120) aufweist.

21. Zähler- oder/und Verteilerschrank nach einem der Ansprüche 15 bis 20,
**dadurch gekennzeichnet,**
**dass** die Rastzahnung (122) an einem im Inneren des Schranks (101) angeordneten Halteblock (123) gebildet ist.

22. Zähler- oder/und Verteilerschrank nach einem der Ansprüche 15 bis 21,
**dadurch gekennzeichnet,**
**dass** die Rastzahnung (122) einander gegenüberliegende Zahnreihen, vorzugsweise eine Nut (130) mit den Zahnreihen an einander gegenüberliegenden Nutenwänden, umfasst.

23. Zähler- oder/und Verteilerschrank nach einem der Ansprüche 15 bis 22,
**dadurch gekennzeichnet,**
**dass** Einrichtungen (119) zur Blockierung der Rastnase (120) in der Rastzahnung (122) vorgesehen sind.

24. Zähler- oder/und Verteilerschronk nach einem der Ansprüche 18 bis 23,
**dadurch gekennzeichnet,**
**dass** der Zapfen (109) einen Längsschlitz (117) und ggf. eine Längsbohrung (119) für die Aufnahme eines Blockierstifts aufweist.

25. Zähler- oder/und Verteilerschrank nach einem der Ansprüche 18 bis 24,
**dadurch gekennzeichnet,**
**dass** der Zapfen (109,110) im Querschnitt eine Rundung (114) oder einen keilförmigen Ansatz aufweist.

26. Zähler- oder/und Verteilerschrank nach einem der Ansprüche 15 bis 25,
**dadurch gekennzeichnet,**
**dass** die Verbindungsschraube (135) einen kronenartig ausgebildeten Kopf aufweist, der durch einen im Winkel zur Schraubenachse durch eine Öffnung (137) im Verbindungsstück hindurch geführtes, einen gezahnten Kegelkopf aufweisendes Werkzeug (136) drehbar ist.

27. Zähler- oder/und Verteilerschrank nach einem der Ansprüche 1 bis 26,
**dadurch gekennzeichnet,**
**dass** der Kabelkanal (16) Einrichtungen zur Stromverteilung oder/und -entnahme aufweist.

## Claims

1. Meter and/or distribution cabinet of the power supply installation for buildings, having an external annex, which can be attached to the cabinet, for forming a cable duct (16) which runs along the cabinet wall, is closed to the outside and is connected to a cable exit opening (15) in the cabinet wall (3),
**characterized**
**in that** the cabinet comprises vertical and horizontal corner parts (5-8) which connect cabinet side wall parts (1-4), and
**in that** the corner parts (5-8) have a recess (34), which opens to the vertical side of the corner parts (5-8), for accommodating a plug connection piece (35) for connecting the cable duct (16) to the cabinet.

2. Meter and/or distribution cabinet according to Claim 1,
**characterized**
**in that** the cable duct (16) is connected to a cable exit opening (15) in the cabinet wall (3) at the top of the cabinet.

3. Meter and/or distribution cabinet according to Claim 1 or 2,
**characterized**
**in that** the cable duct (16) comprises a U-profile (26) and a cover (27) which can be attached to the U-profile (26).

4. Meter and/or distribution cabinet according to one of Claims 1 to 3,
**characterized**
**in that** the cable duct (16) comprises an angular part (41) which is open to the cabinet and to the installation wall.

5. Meter and/or distribution cabinet according to one of Claims 1 to 4,
**characterized**
**in that** the cable duct surrounds the cabinet in the manner of a frame as a subframe (16) or closed frame.

6. Meter and/or distribution cabinet according to Claim 5,
**characterized**
**in that** the cable duct (16) extends along the upper side wall part (3) and at least one of the vertical side wall parts (2, 4) of the cabinet.

7. Meter and/or distribution cabinet according to Claim 6,
**characterized**
**in that** the cable duct (16) is formed at the top of the cabinet by the angular part (41).

8. Meter and/or distribution cabinet according to one of Claims 1 to 7,
**characterized**
**in that** distribution devices and/or plug receptacles (24), in particular which are connected to the cover (27), are incorporated in the cable duct (16).

9. Meter and/or distribution cabinet according to one of Claims 1 to 8,
**characterized**
**in that** the connecting piece (35) latches into the recess (34).

10. Meter and/or distribution cabinet according to one of Claims 1 to 9,
**characterized**
**in that** the connecting piece (35) has claws (36) which engage behind an end border of the duct wall of a lateral cable duct (18a, 19a).

11. Meter and/or distribution cabinet according to one of Claims 4 to 10,
**characterized**
**in that** the angular part (41a) is fastened to the cabinet by a connecting piece (21a) having a retaining limb (42) which is arranged at a distance from the rear wall plane of the cabinet and projects upwards.

12. Meter and/or distribution cabinet according to Claim 11,
**characterized**
**in that** an extension, which is intended to be fastened to the installation wall, is attached in an articulated manner to the retaining limb.

13. Meter or/and distribution cabinet according to one of Claims 1 to 12, **characterized by** a retaining apparatus for the external annex (105), having devices for fastening the external annex (105) to a cabinet side wall (102), wherein the fastening devices are provided for attaching the external annex (105) to the cabinet side wall (102) at different distances from the cabinet rear wall.

14. Meter or/and distribution cabinet according to Claim 13,
**characterized**
**in that** the distances from the cabinet rear wall can be adjusted continuously or in stages.

15. Meter or/and distribution cabinet according to Claim 13 or 14,
**characterized**
**in that** the fastening devices have latching or/and screw-connection devices, and the different distances correspond to different positions of a latching lug (120) in a latching tooth system (122) or to different positions of a connecting screw (135) in an elongate hole (133).

16. Meter or/and distribution cabinet according to one of Claims 13 to 15,
**characterized**
**in that** the fastening devices comprise a, preferably separate, connecting piece (106) which can be attached to the cabinet (101) or to the external annex (105) in different positions.

17. Meter or/and distribution cabinet according to Claim 16,
**characterized**
**in that** the connecting piece (106) is in the form of a bracket, wherein one bracket limb (107) can be or is connected to the cabinet (101), and the other bracket limb (108) can be or is connected to the external annex (105).

18. Meter or/and distribution cabinet according to Claim 17,
**characterized**
**in that** a peg (109, 110), which projects from the connecting piece (106), engages in an opening in the cabinet side wall (102).

19. Meter or/and distribution cabinet according to Claims 17 or 18,
**characterized**
**in that** the opening is in the form of an elongate hole and has a widened portion into which an undercut head of the peg (109, 110) can be inserted.

20. Meter or/and distribution cabinet according to Claim 19,
**characterized**
**in that** the undercut head has lugs (120) which latch into the latching tooth system (122).

21. Meter or/and distribution cabinet according to one of Claims 15 to 20,
**characterized**
**in that** the latching tooth system (122) is formed on a retaining block (123) which is arranged in the interior of the cabinet (101).

22. Meter or/and distribution cabinet according to one of Claims 15 to 21,
**characterized**
**in that** the latching tooth system (122) comprises rows of teeth which are situated opposite one another, preferably a groove (130) with the rows of teeth on mutually opposite groove walls.

23. Meter or/and distribution cabinet according to one of Claims 15 to 22,
**characterized**
**in that** devices (119) for blocking the latching lug (120) are provided in the latching tooth system (122).

24. Meter or/and distribution cabinet according to one of Claims 18 to 23,
**characterized**
**in that** the peg (109) has a longitudinal slot (117) and possibly a longitudinal bore (119) for accommodating a blocking pin.

25. Meter or/and distribution cabinet according to one of Claims 18 to 24,
**characterized**
**in that** the peg (109, 110) has, in cross section, a rounded portion (114) or a wedge-like attachment piece.

26. Meter or/and distribution cabinet according to one of Claims 15 to 25,
**characterized**
**in that** the connecting screw (135) has a head which is in the form of a crown and can be rotated by a tool (136) which is routed through an opening (137) in the connecting piece at an angle to the screw axis and which has a toothed conical head.

27. Meter or/and distribution cabinet according to one of Claims 1 to 26,
**characterized**
**in that** the cable duct (16) has devices for distributing or/and drawing power.

## Revendications

1. Armoire de distribution ou armoire pour compteur électrique destinée à des installations d'alimentation électrique de bâtiments, comprenant un élément rapporté extérieur susceptible d'être fixé sur l'armoire afin de former un canal à câbles (16) s'étendant le long de la paroi de l'armoire, qui est fermé vers l'extérieur et qui est relié à une ouverture de sortie de câbles (15) dans la paroi (3) de l'armoire,
**caractérisée en ce que**
l'armoire comprend des pièces de coin (5-8) qui relient des parties de parois latérales verticales et horizontales (1-4) de l'armoire, et
**en ce que** les pièces de coin (5-8) comportent un évidement (34) qui s'ouvre vers le côté vertical des pièces de coin (5-8) afin de recevoir une pièce de liaison enfichable (35) pour la liaison du canal à câbles (16) avec l'armoire.

2. Armoire de distribution ou armoire pour compteur électrique selon la revendication 1,
**caractérisée en ce que** le canal à câbles (16) est relié à une ouverture de sortie de câbles (15) dans la paroi (3) de l'armoire au niveau de la face supérieure de l'armoire.

3. Armoire de distribution ou armoire pour compteur électrique selon la revendication 1 ou 2,
**caractérisée en ce que** le canal à câbles (16) comprend un profile en U (26) et un couvercle (27) qui peut être fixé sur le profilé en U (26).

4. Armoire de distribution ou armoire pour compteur électrique selon l'une des revendications 1 à 3,
**caractérisée en ce que** le canal à câbles (16) comprend une pièce en équerre (41) ouverte vers l'armoire et vers le mur d'installation.

5. Armoire de distribution ou armoire pour compteur électrique selon l'une des revendications 1 à 4,
**caractérisée en ce que** le canal à câbles s'étend sur la périphérie de l'armoire à la manière d'un cadre en formant un cadre partiel (16) ou un cadre fermé.

6. Armoire de distribution ou armoire pour compteur électrique selon la revendication 5,
**caractérisée en ce que** le canal à câbles (16) s'étend le long de la partie de paroi à la face supérieure (3) et au moins le long de l'une des parties de parois latérales verticales (2, 4).

7. Armoire de distribution ou armoire pour compteur électrique selon la revendication 6,
**caractérisée en ce que** le canal à câbles (16) au niveau de la face supérieure de l'armoire est formé par la pièce en équerre (41).

8. Armoire de distribution ou armoire pour compteur électrique selon l'une des revendications 1 à 7,
**caractérisée en ce que** des dispositifs distributeurs et/ou des prises à enfichage (24), en particulier reliées au couvercle (27), sont întégré(e)s dans le canal à câbles (16).

9. Armoire de distribution ou armoire pour compteur électrique selon l'une des revendications 1 à 8,
**caractérisée en ce que** la pièce de liaison (35) s'enclenche dans l'évidement (34).

10. Armoire de distribution ou armoire pour compteur électrique selon l'une des revendications 1 à 9,
**caractérisée en ce que** la pièce de liaison (35) comprend des griffes (36) qui s'engagent derrière une bordure d'extrémité de la paroi d'un canal à câbles latéral (18a, 19a).

11. Armoire de distribution ou armoire pour compteur électrique selon l'une des revendications 4 à 10,
**caractérisée ce que** la pièce en équerre (41a) est fixée sur l'armoire par une pièce de liaison (21a) avec une branche de maintien (42) agencée à distance du plan de la paroi postérieure de l'armoire et dépassant vers le haut.

12. Armoire de distribution ou armoire pour compteur électrique selon la revendication 11,
**caractérisée en ce qu'**un prolongement, prévu pour la fixation sur le mur d'installation, est monté de façon articulée sur la branche de maintien.

13. Armoire de distribution ou armoire pour compteur électrique selon l'une des revendications 1 à 12,
**caractérisée par** un dispositif de maintien pour l'élément rapporté extérieur (105), avec des moyens pour la fixation de l'élément rapporté extérieur (105) sur une paroi latérale (102) de l'armoire, le dispositif de maintien étant prévu pour la fixation de l'élément rapporté extérieur (105) sur la paroi latérale (102) de l'armoire à différentes distances de la paroi postérieure de l'armoire.

14. Armoire de distribution ou armoire pour compteur électrique selon la revendication 13,
**caractérisée en ce que** les distances par rapport à la paroi postérieure de l'armoire sont réglables en continu ou par pas.

15. Armoise de distribution ou armoire pour compteur électrique selon la revendication 13 ou 14,
**caractérisée en ce que** les moyens de fixation comprennent des moyens de liaison par enclenchement et/ou par vissage, et les différentes distances correspondent à différentes positions d'un ergot d'enclenchement (120) dans une denture d'enclenchement (122) ou à différentes positions d'une vis de liaison (135) dans un trou oblong (135).

16. Armoire de distribution ou armoire pour compteur électrique selon l'une des revendications 13 à 15,
**caractérisée en ce que** les moyens de fixation comprennent une pièce de liaison (116), de préférence séparée, susceptible d'être montée dans positions sur l'armoire (101) ou sur l'élément rapporté extérieur (105).

17. Armoire de distribution ou armoire pour compteur électrique selon la revendication 16,
**caractérisée en ce que** la pièce de liaison (106) est réalisée sous forme d'équerre, dans laquelle une branche (107) de l'équerre est reliée ou susceptible d'être reliée à l'armoire (101), et l'autre branche (108) de l'équerre est reliée ou susceptible d'être reliée à l'élément rapporté extérieur (105).

18. Armoire de distribution ou armoire pour compteur électrique selon la revendication 17,
**caractérisée en ce qu'**un tenon (109, 110) dépassant de pièce de liaison (106) s'engage dans une ouverture de la paroi latérale (102) de l'armoire.

19. Armoire de distribution ou armoire pour compteur électrique selon la revendication 17 ou 18,
**caractérisée en ce que** l'ouverture est réalisée sous forme de trou oblong et comporte un élargissement dans lequel peut être introduite une tête du tenon (109, 110), laquelle comporte une contre-dépouille.

20. Armoire de distribution ou armoire pour compteur électrique selon la revendication 19,
**caractérisée en ce que** la tête avec contre-dépouille comporte des ergots (120) qui s'enclenchent dans la denture d'enclenchement (122).

21. Armoire de distribution ou armoire pour compteur électrique selon l'une des revendications 15 à 20,
**caractérisée en ce que** la denture d'enclenchement (122) est formée sur un bloc de maintien (123) agencé à l'intérieur de l'armoire (101).

22. Armoire de distribution ou armoire pour compteur électrique selon ]'une des revendications 15 à 21,
**caractérisée en ce que** la denture d'enclenchement (122) comprend des rangées de dents mutuellement opposées, de préférence une gorge (130) avec les rangées de dents sur des flancs mutuellement opposés de la gorge.

23. Armoire de distribution ou armoire pour compteur électrique selon l'une des revendications 15 à 22,
**caractérisée en ce qu'**il est prévu des moyens (119) pour bloquer l'ergot d'enclenchement (120) dans la denture d'enclenchement (122).

24. Armoire de distribution ou armoire pour compteur électrique selon l'une des revendications 18 à 23,
**caractérisée en ce que** le tenon comporte une fente longitudinale (117) et le cas échéant un perçage longitudinal (119) pour la réception d'une tige de blocage.

25. Armoire de distribution ou armoire pour compteur électrique selon l'une des revendications 18 à 24,
**caractérisée en ce que** le tenon (109, 110) comporte en section transversale un arrondi (114) ou un talon en forme de coin.

26. Armoire de distribution ou armoire pour compteur électrique selon l'une des revendications 15 à 25,
**caractérisée en ce que** la vis de liaison (135) comprend une tête réalisée à la manière d'une couronne, qui peut être mise en rotation par un outil (136), lequel présente une tête conique dentée et est passé à travers une ouverture (137) dans la pièce de liaison sous un angle par rapport à l'axe de la vis.

27. Armoire de distribution ou armoire pour compteur électrique selon l'une des revendications 1 à 26,
**caractérisée en ce que** le canal à câbles (16) comprend des systèmes pour la distribution du courant et/ou pour le prélèvement de courant.
